Europäisches Patentamt

European Patent Office

Office européen des brevets

(19)

(11) Veröffentlichungsnummer: **0 509 238 A1**

## (12) EUROPÄISCHE PATENTANMELDUNG

(21) Anmeldenummer: **92104251.1**

(22) Anmeldetag: **12.03.92**

(51) Int. Cl.⁵: **B21D 53/84**

(30) Priorität: **16.04.91 DE 4112366**

(43) Veröffentlichungstag der Anmeldung:
**21.10.92 Patentblatt 92/43**

(84) Benannte Vertragsstaaten:
**DE ES FR GB IT PT SE**

(71) Anmelder: **Balcke-Dürr AG**
**Homberger Strasse 2 Postfach 1240**
**W-4030 Ratingen 1(DE)**

(72) Erfinder: **Podhorsky, Mirsolav, Dr.**
**Am Hang 5**
**W-4030 Ratingen 1(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Hohlwelle.**

(57) Die Erfindung betrifft eine Hohlwelle mit durch hydraulisches Aufweiten befestigten Teilen, wobei jedes Teil aus einem die zentrale Bohrung (2a) für den Preßsitz auf der Hohlwelle (1) aufweisenden und die Außenkontur vorgebenden Grundkörper (2) und aus einer dünnwandigen Ummantelung (3) aus verschleißfestem und elastischen Material besteht. Durch das hydraulische Aufweiten der Hohlwelle (1) sitzt die Ummantelung (3) kraftschlüssig auf der Mantelfläche des mit mindestens einer Trennstelle (4) versehenen Grundkörpers (2). Die Ummantelung (3) bewirkt durch die in der Ummantelung (3) infolge des hydraulischen Aufweitens erzeugten Membranspannungen den über den Grundkörper (2) auf die Hohlwelle (1) übertragenen Kraftschluß.

Fig. 2

Die Erfindung betrifft eine Hohlwelle mit durch hydraulisches Aufweiten befestigten Teilen, insbesondere eine Nockenwelle.

Hohlwellen mit durch hydraulisches Aufweiten befestigten Teilen sind beispielsweise als sogenannte "gebaute" Nockenwellen bekannt. Sie sind preisgünstig herstellbar und haben den Vorteil, daß einerseits für die Hohlwelle und andererseits für die auf ihr befestigten Teile das für die jeweilige Belastung günstigste Material ausgewählt werden kann. Für eine Nockenwelle bedeutet dies, daß die Nocken aus verschleißfestem Material einzeln und damit kostengünstig hergestellt werden können, wogegen für die Hohlwelle ein preiswertes Material verwendet werden kann, das speziell im Hinblick auf die Beanspruchungen dieser Welle ausgewählt wird.

Die Befestigung der Teile auf der Hohlwelle erfolgt durch hydraulisches Aufweiten. Die Teile haben eine zentrale Bohrung, deren Durchmesser im Ausgangszustand geringfügig größer als der Außendurchmesser der Hohlwelle ist, so daß die Teile in die gewünschte Lage und Position auf der Hohlwelle gebracht werden können, bevor der hydraulische Aufweitvorgang stattfindet. Durch das hydraulische Aufweiten der Hohlwelle und damit der Teile werden in den Teilen elastische Rückformkräfte erzeugt, die nach Abbau des Aufweitdruckes eine kraftschlüssige Verbindung zwischen den Teilen und der Hohlwelle ergeben. Die nach Abbau des Aufweitdruckes tatsächlich zur Verfügung stehende Haltekraft ist hierbei von einer Anzahl von Faktoren abhängig, welche sich unter anderem aus den Materialeigenschaften bzw. den Materialpaarungen und aus der Formgebung der Teile ergeben.

Der Erfindung liegt die **Aufgabe** zugrunde, die auf der Hohlwelle durch hydraulisches Aufweiten zu befestigenden Teile derart weiterzubilden, daß sie preiswert und dem jeweiligen Einsatzzweck angepaßt hergestellt und auf einfache Weise zur Erzielung einer hohen Haltekraft auf der Hohlwelle befestigt werden können.

Die **Lösung** dieser Aufgabenstellung durch die Erfindung ist dadurch gekennzeichnet, daß jedes auf der Hohlwelle zu befestigende Teil aus einem die zentrale Bohrung für den Preßsitz auf der Hohlwelle aufweisenden und die Außenkontur vorgebenden Grundkörper und aus einer dünnwandigen Ummantelung aus verschleißfestem und elastischen Material besteht, die durch das hydraulische Aufweiten der Hohlwelle kraftschlüssig auf der Mantelfläche des mit mindestens einer Trennstelle versehenen Grundkörpers sitzt und durch die in der Ummantelung infolge des hydraulischen Aufweitens erzeugten Membranspannungen den über den Grundkörper auf die Hohlwelle übertragenen Kraftschluß bewirkt.

Durch die erfindungsgemäße Aufteilung der auf der Hohlwelle zu befestigenden Teile in einen Grundkörper, der einerseits die Außenkontur vorgibt und andererseits die Haltekraft auf die Hohlwelle überträgt, und in eine Ummantelung, die aus verschleißfestem und elastischen Material besteht, kann jedes Teil nicht nur preiswerter hergestellt werden, weil hochwertiges Material nur für die Ummantelung verwendet wird, sondern auch auf einfache und dennoch hohe Haltekräfte bewirkende Weise auf der Hohlwelle befestigt werden. Die Befestigung wird hierbei ausschließlich durch die Elastizität der Ummantelung bewirkt, wobei der Grundkörper nur der Übertragung der in der Ummantelung durch das hydraulische Aufweiten erzeugten Membranspannungen als Radialkräfte auf die Hohlwelle dient; der Grundkörper kann somit aus preiswertem Material bestehen. Da der Grundkörper mit mindestens einer Trennstelle versehen, d.h. mindestens einmal geschlitzt ist, stellt er der elastischen Aufweitung der auf ihm sitzenden Ummantelung nur einen unwesentlichen Widerstand entgegen. Der für das hydraulische Aufweiten erforderliche Aufweitdruck kann somit zur Erzielung desselben Kraftschlusses gegenüber einem ungeschlitzten Bauteil erheblich gesenkt werden, weil bei der erfindungsgemäßen Ausbildung die Aufweitkräfte im wesentlichen nur durch die Ummantelung vorgegeben werden.

Bei einer bevorzugten Ausführungsform ist der Grundkörper als Nocken ausgebildet, so daß die Ummantelung eine von der Kreisform abweichende Form einnimmt. Sofern das auf der Hohlwelle zu befestigende Bauteil als Lagerring Verwendung finden soll, ist der Grundkörper erfindungsgemäß mit kreiszylindrischer Außenkontur ausgebildet.

Gemäß einem weiteren Merkmal der Erfindung kann der Grundkörper mit kreisförmiger Außenkontur und die Ummantelung auf ihrer Außenfläche mit einem Zahnprofil ausgebildet sein. In diesem Fall ergibt sich ein Zahnrad, das in der voranstehend beschriebenen Weise auf einer Hohlwelle befestigt werden kann. Selbstverständlich sind auch Keil- oder Zahnriemenscheiben in der voranstehend beschriebenen Weise herstellbar, indem die Ummantelung auf ihrer Außenfläche mit einem entsprechenden Profil ausgebildet wird.

Bei einer erfindungsgemäßen Weiterbildung kann der mit einer nockenartigen Außenkontur ausgebildete Grundkörper mindestens im Exzenterbereich mit einem den Widerstand des Grundkörpers verringernden Entlastungsschlitz versehen sein. Durch diesen Entlastungsschlitz wird das Verformungsverhalten des Grundkörpers beim hydraulischen Aufweiten der Hohlwelle über den Umfang des Hohlkörpers vergleichmäßigt, so daß in der auf dem Grundkörper sitzenden Ummantelung gleichmäßige Membranspannungen entstehen.

Für die Funktion der Erfindung ist es nicht erforderlich, daß der Grundkörper einstückig ausgebildet ist, es ist somit gemäß einem weiteren Merkmal der Erfindung möglich, den Grundkörper durch mindestens zwei Trennstellen mehrteilig auszubilden. Hierdurch ergibt sich der Vorteil, daß der mehrteilige Grundkörper aus unterschiedlichen Werkstoffen hergestellt werden kann.

Bei einer bevorzugten Ausführungsform der Erfindung ist die Ummantelung durch seitliche Abbiegungen auf dem Grundkörper in axialer Richtung gehalten. Die Ummantelung kann aus einer hochwertigen metallischen Verbindung, beispielweise einem metallischen Glas hergestellt werden, wogegen die Herstellung des Grundkörpers aus Stahl, Guß, Sinterwerkstoff oder Kunststoff erfolgen kann.

Auf der Zeichnung sind zwei Ausführungsbeispiele der erfindungsgemäßen Hohlwelle dargestellt, und zwar zeigen:

Fig. 1 einen Längsschnitt durch einen Teil einer Hohlwelle mit einem auf dieser Hohlwelle befestigten Teil in der Form eines Nockens,

Fig. 2 einen Querschnitt gemäß der Schnittlinie II - II in Fig. 1,

Fig. 3 einen weiteren Querschnitt durch die Hohlwelle gemäß der Schnittlinie III - III in Fig. 1 mit einer Seitenansicht des Nockens und

Fig. 4 einen der Fig. 2 entsprechenden Querschnitt durch eine zweite Ausführungsform des Nockens.

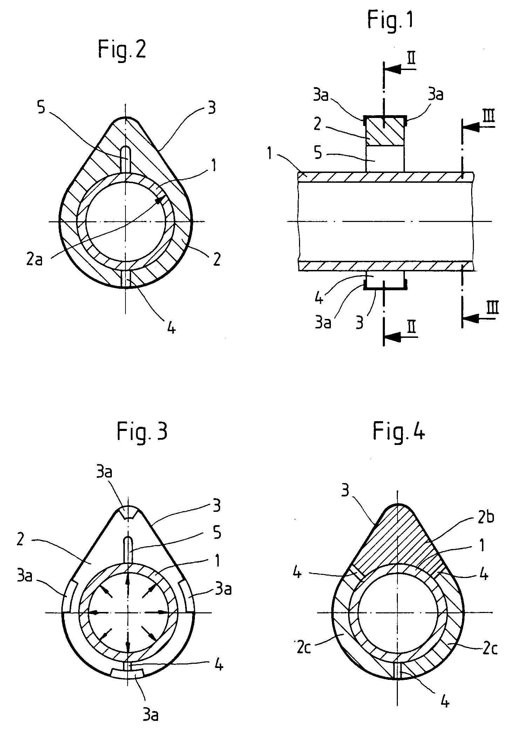

Die beim Ausführungsbeispiel als Nockenwelle dargestellte Hohlwelle 1, von der in Fig. 1 ein Teil im Längsschnitt und die in den Fig. 2 bis 4 im Querschnitt gezeichnet ist, dient zur Aufnahme von Teilen, die auf der Hohlwelle 1 durch hydraulisches Aufweiten befestigt werden. Bei beiden Ausführungsbeispielen ist das Teil als Nocken gezeichnet, obwohl derartige Teile auch mit kreiszylindrischer Außenkontur beispielsweise in Form von Lagerringen ausgebildet sein können.

Jedes Teil besteht aus einem Grundkörper 2 und einer dünnwandigen Ummantelung 3, die auf der Mantelfläche des Grundkörpers 2 angeordnet ist. Der Grundkörper 2 ist mit einer zentralen Bohrung 2a versehen, deren Durchmesser im Ausgangszustand geringfügig größer ist als der Außendurchmesser der Hohlwelle 1 vor deren hydraulischem Aufweiten. Die Außenkontur des auf der Hohlwelle 1 zu befestigenden Teils, im Ausführungsbeispiel des Nockens, wird durch den Grundkörper 2 vorgegeben. Der Grundkörper 2 kann aus Stahl, Guß, Sinterwerkstoff oder Kunststoff hergestellt sein. Er ist mit mindestens einer Trennstelle 4 versehen, damit sein Material ohne nennenswerten Widerstand nachgibt, wenn die Hohlwelle 1 aufgeweitet wird.

Die dünnwandige Ummantelung 3 besteht aus einem verschleißfesten und elastischen Material, das auf die jeweiligen Anforderungen des auf der Hohlwelle 1 befestigten Teils, insbesondere des Nockens abgestimmt ist. Die Ummantelung kann beispielsweise aus einer hochwertigen metallischen Verbindung, z.B einem metallischen Glas hergestellt sein. Um ein seitliches Abgleiten der Ummantelung 3 vom Grundkörper 2 zu verhindern, kann die Ummantelung 3 gemäß dem ersten Ausführungsbeispiel nach den Fig. 1 bis 3 mit seitlichen Abbiegungen 3a versehen sein.

Der aus dem Grundkörper 2 und der Ummantelung 3 bestehenden Nocken wird auf die Hohlwelle 1 aufgeschoben und in der richtigen Lage und Position festgehalten. Anschließend erfolgt ein hydraulisches Aufweiten der Hohlwelle 1, wodurch sich auch der mit mindestens einer Trennstelle 4 versehene Grundkörper 2 aufweitet und in der Ummantelung 3 Membranspannungen erzeugt werden, welche die Ummantelung 3 nicht nur kraft- und formschlüssig auf der Mantelfläche des Grundkörpers 2 festhalten, sondern über den Grundkörper 2 Kräfte auf die Hohlwelle 1 übertragen, so daß der Grundkörper 2 durch Kraftschluß auf der Hohlwelle 1 gehalten wird. Während der Grundkörper 2 somit ausschließlich der Übertragung von Kräften dient, werden die den Kraftschluß zwischen Grundkörper 2 und Hohlwelle 1 bewirkenden Kräfte ausschließlich durch die in der dünnwandigen Ummantelung 3 erzeugten Membranspannungen hervorgerufen, die im wesentlichen von den Materialeigenschaften der Ummantelung 3 abhängig sind. Die elastischen Eigenschaften des Materials der Ummantelung 3 und die hierdurch bewirkten Rückformkräfte sind somit ausschlaggebend für die kraftschlüssige Verbindung des aus Grundkörper 2 und Ummantelung 3 bestehenden Teiles mit der Hohlwelle 1.

Aus dem Voranstehenden geht deutlich hervor, daß für den Grundkörper 2 ein preiswertes Material verwendet werden kann, wogegen das Material der Ummantelung 3 einerseits den an die Oberfläche des Teiles gestellten Anforderungen, beispielsweise einer hohen Abriebfestigkeit, genügen muß und die notwendige Elastizität aufweisen muß, die ursächlich für die auf die Hohlwelle 1 wirkenden Radialkräfte ist.

Außer der in den Fig. 1 bis 3 erkennbaren Trennstelle 4 ist bei diesem Ausführungsbeispiel der als Nocken ausgebildete Grundkörper 2 im Exzenterbereich mit einem den Widerstand des Grundkörpers 2 verringernden Entlastungsschlitz 5 versehen. Dieser Entlastungsschlitz 5 gleicht das Verformungsverhalten des Grundkörpers 2 im Exzenterbereich dem Verformungsverhalten des Grundkörpers 2 im restlichen Bereich an, so daß der Grundkörper 2 auch im Exzenterbereich dem Aufweiten keinen nennenswerten Widerstand entgegensetzt.

Beim zweiten Ausführungsbeispiel nach Fig. 4 ist der Grundkörper 2 durch insgesamt drei Trennstellen 4 in drei Teilstücke 2b,2c,2d aufgeteilt, von denen das Teilstück 2b den Exzenterbereich bildet. Durch diese Aufteilung des Grundkörpers 2 in mehrere Einzelteile besteht die Möglichkeit, die Teilstücke 2b,2c und 2d des Grundkörpers 2 aus unterschiedlichen Materialien herzustellen, und zwar je nach Art ihrer Beanspruchung.

**Bezugszeichenliste:**

| 1 | Hohlwelle |
|---|---|
| 2 | Grundkörper |
| 2a | zentrale Bohrung |
| 2b | Teilstück |
| 2c | Teilstück |
| 2d | Teilstück |
| 3 | Ummantelung |
| 3a | Abbiegung |
| 4 | Trennstelle |
| 5 | Entlastungsschlitz |

**Patentansprüche**

1. Hohlwelle mit durch hydraulisches Aufweiten befestigten Teilen,
   **dadurch gekennzeichnet,**
   daß jedes Teil aus einem die zentrale Bohrung (2a) für den Preßsitz auf der Hohlwelle (1) aufweisenden und die Außenkontur vorgebenden Grundkörper (2) und aus einer dünnwandigen Ummantelung (3) aus verschleißfestem und elastischem Material besteht, die durch das hydraulische Aufweiten der Hohlwelle (1) kraftschlüssig auf der Mantelfläche des mit mindestens einer Trennstelle (4) versehenen Grundkörpers (2) sitzt und durch die in der Ummantelung (3) infolge des hydraulischen Aufweitens erzeugten Membranspannungen den über den Grundkörper (2) auf die Hohlwelle (1) übertragenen Kraftschluß bewirkt.

2. Hohlwelle nach Anspruch 1, dadurch gekennzeichnet, daß der Grundkörper (2) als Nocken ausgebildet ist.

3. Hohlwelle nach Anspruch 1, dadurch gekennzeichnet, daß der Grundkörper (2) mit kreiszylindrischer Außenkontur ausgebildet ist.

4. Hohlwelle nach Anspruch 3, dadurch gekennzeichnet, daß der Grundkörper (2) mit kreiszylindrischer Außenkontur und die Ummantelung (3) auf ihrer Außenfläche mit einem Profil ausgebildet ist

5. Hohlwelle nach Anspruch 1 und 2, dadurch gekennzeichnet, daß der mit einer nockenartigen Außenkontur ausgebildete Grundkörper (2) mindestens im Exzenterbereich mit einem den Widerstand des Grundkörpers (2) verringernden Entlastungsschlitz (5) versehen ist.

6. Hohlwelle nach mindestens einem der Ansprüche 1 bis 5, dadurch gekennzeichnet, daß der Grundkörper (2) durch mindestens zwei Trennstellen (4) mehrteilig ausgebildet ist.

7. Hohlwelle nach Anspruch 6, dadurch gekennzeichnet, daß der mehrteilige Grundkörper (2b,2c,2d) aus unterschiedlichen Werkstoffen hergestellt ist.

8. Hohlwelle nach mindestens einem der Ansprüche 1 bis 7, dadurch gekennzeichnet, daß die Ummantelung (3) durch seitliche Abbiegungen (3a) auf dem Grundkörper (2) in axialer Richtung gehalten ist.

9. Hohlwelle nach mindestens einem der Ansprüche 1 bis 8, dadurch gekennzeichnet, daß die Ummantelung (3) aus einer hochwertigen metallischen Verbindung, beispielsweise einem metallischen Glas hergestellt ist.

10. Hohlwelle nach mindestens einem der Ansprüche 1 bis 9, dadurch gekennzeichnet, daß der Grundkörper (2) aus Stahl, Guß, Sinterwerkstoff oder Kunststoff hergestellt ist.

Fig.1

Fig.2

Fig.3

Fig.4

Europäisches
Patentamt

**EUROPÄISCHER RECHERCHENBERICHT**

Nummer der Anmeldung

EP    92 10 4251

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 623 266 (EMITEC) <br> * Seite 2, Zeile 21 - Seite 6, Zeile 12; Abbildung 2 * <br><br> --- | 1-5 | B21D53/84 |
| A | EP-A-0 328 009 (EMITEC) <br><br> ----- | | |

|  |  |
|---|---|
| | **RECHERCHIERTE SACHGEBIETE (Int. Cl.5 )** |
| | B21D <br> F01L <br> F16H <br> F16D <br> B23P |

Der vorliegende Recherchenbericht wurde für alle Patentansprüche erstellt

| Recherchenort | Abschlußdatum der Recherche | Prüfer |
|---|---|---|
| BERLIN | 16 JUNI 1992 | HOFFMANN M. |